# EUROPÄISCHE PATENTSCHRIFT

(11) **EP 1 873 017 B1**
(45) Veröffentlichungstag und Bekanntmachung des Hinweises auf die Patenterteilung: **02.04.2014**
(21) Anmeldenummer: 07010603.4
(22) Anmeldetag: 29.05.2007
(51) Int. Cl.: B60R 13/02

(54) **Fahrzeugwand**
Vehicle body wall
Paroi de véhicule

(30) Priorität: 01.07.2006 DE 102006030522
(43) Veröffentlichungstag der Anmeldung: 02.01.2008
(73) Patentinhaber: Dr. Ing. h.c. F. Porsche AG, 70435 Stuttgart (DE)
(72) Erfinder: Lutz, Erwin, 71701 Schwieberdingen (DE); Nabert, Bernd, 72296 Schopfloch (DE)

(56) Entgegenhaltungen:
- EP-A- 0 882 615
- EP-A- 0 921 023
- DE-A1- 3 525 816
- DE-C1- 3 903 679
- DE-U1-202004 009 799
- GB-A- 2 015 437

## Beschreibung

Bei der Erfindung wird ausgegangen von einer Fahrzeugwand gemäß Oberbegriff des Patentanspruchs 1.

Eine gattungsbildende Fahrzeugwand ist durch den Porsche Boxster bekannt geworden. Die Fahrzeugwand ist zusammengesetzt aus einer eine Aufbausäule umfassenden Karosseriewand, die eine Außenseite und eine einem Fahrzeuginnenraum zugekehrt liegende Innenseite aufweist, und aus einer inneren Säulenverkleidung für die Innenseite der Karosseriewand. Etwa in Fahrzeuglängsrichtung und in der Gürtellinie verläuft eine Durchtrittsöffnung für ein Verdeckgestänge eines Verdecks, wobei die Durchtrittsöffnung seitlich innen und an ihrem vorderen, benachbart zur Aufbausäule liegende Ende von der Säulenverkleidung sowie seitlich außen von der Karosseriewand begrenzt wird.

Aus der DE 35 25 816 C2 ist zwischen einem Seitenschweller und einem Vordersitz eine Verkleidung angeordnet, die an ihrem einen dem Vordersitz zugekehrten Ende eine längliche Dichtungslippe aufweist.

Aufgabe der Erfindung ist es, eine Fahrzeugwand der eingangs genannten Art zu optimieren.

Gelöst wird diese Aufgabe mit einer Fahrzeugwand, die die in Anspruch 1 genannten Merkmale aufweist. Vorteilhafte Ausgestaltungen sind in den Unteransprüchen angegeben.

Der mit der Erfindung hauptsächlich erzielte Vorteil ist darin zu sehen, dass bei in Schließstellung vorliegendem Verdeck die Durchtrittsöffnung durch das Verdeckgestänge zum Fahrzeuginnenraum hin verschlossen wird, wenn das Verdeckgestänge an dem Dichtungsprofilstrang anliegt. Dabei wird in vorteilhafter Weise die Durchtrittsöffnung sowohl seitlich innen als auch an ihrem vorderen, benachbart zur Aufbausäule liegenden Ende von dem an dem Verdeckgestänge anliegenden Dichtungsprofilstrang verschlossen, wodurch einerseits eine optisch ansprechende Wirkung und andererseits eine Geräuschreduzierung im Fahrzeuginnenraum erzielt wird, da ein Austritt von Körperschall aus der Fahrzeugwand zumindest reduziert wird.

Mit den in Anspruch 2 bzw. 3 angegebenen Merkmalen kann ein einfach herstellbarer Dichtungsprofilstrang bereitgestellt werden.

Eine einfache Befestigung des Dichtungsprofilstranges an der Säulenverkleidung ist nach Anspruch 4 gegeben. Und nach Anspruch 5 ist eine dauerhafte und einfach herstellbare Befestigungsmöglichkeit verwirklicht. Zusätzlich oder alternativ kann als weitere Befestigungsmöglichkeit ein Klebestreifen verwendet werden, wie in Anspruch 6 angegeben. Vorzugsweise werden sowohl zumindest eine Schweißrippe als auch der Klebestreifen verwendet.

Gemäß Anspruch 7 ist die Säulenverkleidung kostengünstig im Spritzgussverfahren einstückig herstellbar.

Die Erfindung wird nachfolgend anhand eines Ausführungsbeispiels mit Bezug auf die Zeichnung näher erläutert. Es zeigen:
- Fig. 1: ausschnittweise ein Kraftfahrzeug mit einem Verdeck in Schließstellung,
- Fig. 2: ausschnittweise eine Perspektive des Kraftfahrzeugs mit einer Fahrzeugwand und mit dem Verdeck in Teilöffnungsstellung,
- Fig. 3: eine Säulenverkleidung der Fahrzeugwand,
- Fig. 4: einen Schnitt durch die Säulenverkleidung entlang der Linie IV - IV in Fig. 3 und
- Fig. 5: eine Draufsicht auf einen Dichtungsprofilstrang der Säulenverkleidung.

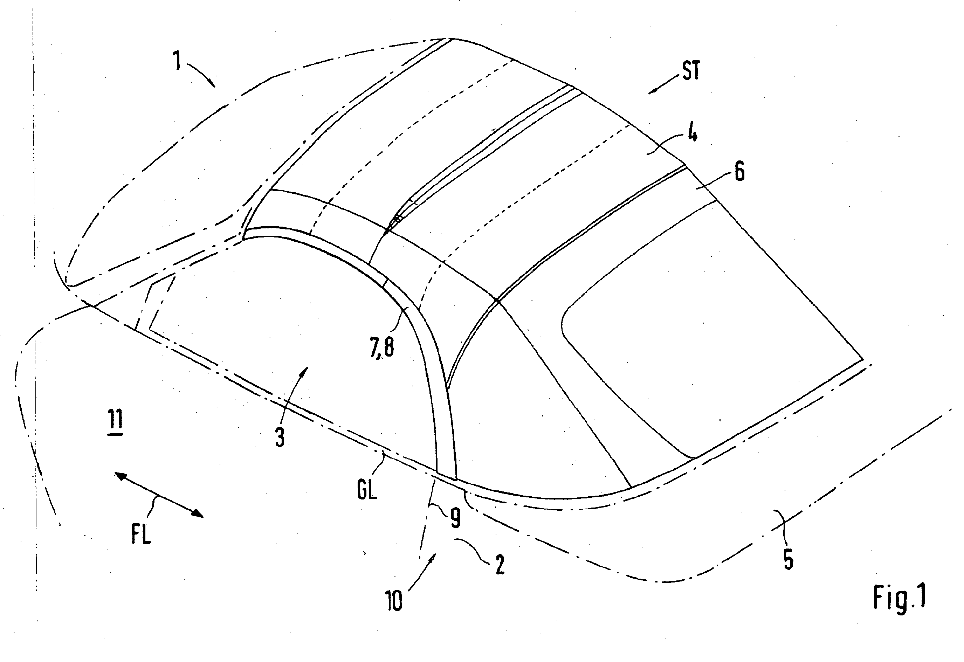

Fig. 1 zeigt ein Kraftfahrzeug 1 mit einer teilweise dargestellten Karosserie 2 in offener Bauweise für ein Cabriolet. Das Kraftfahrzeug 1 weist einen Fahrzeuginnenraum 3 auf, der von einem Verdeck 4 oberhalb einer Gürtellinie GL nach oben verschlossen wird, wenn sich das Verdeck 4 in seiner gezeigt Schließstellung ST befindet. In einer nicht dargestellten Ablagestellung ist das Verdeck 4 in einem unter einem bewegbaren Verdeckkastendeckel 5 liegenden Ablagekasten verstaut. Das Verdeck weist vorzugsweise als Dachhaut einen Verdeckbezug 6 auf, der an einem Verdeckgestänge 7 gehalten ist, von dem allerdings in Fig. 1 lediglich ein seitlicher Dachrahmen 8 zu sehen ist. In eine Karosserieöffnung 9 einer Fahrzeugwand 10 ist noch eine Seitentür 11 eingesetzt.

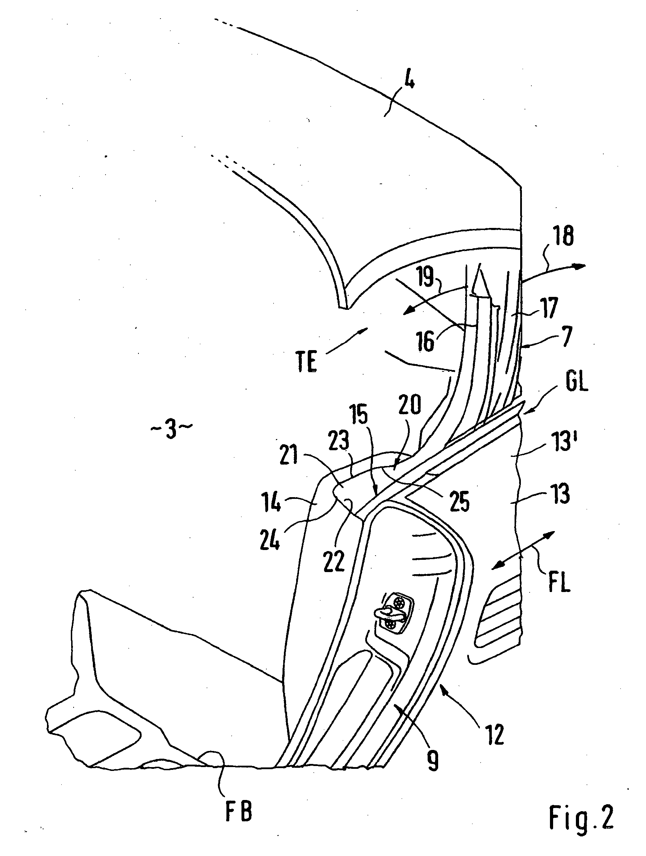

Die Fig. 2 zeigt die Seitentür 11 geöffnet, so dass die Karosserieöffnung 9 in der Fahrzeugwand 10 freigegeben wird. Die Fahrzeugwand 10 weist eine Aufbausäule 12, hier die B-Säule, eine eine Außenhaut bzw. Außenseite 13' bildende Karosseriewand 13 und eine innere, dem Fahrzeuginnenraum 3 zugewandte Säulenverkleidung 14 auf. Die Säulenverkleidung 14 ist somit einer Innenseite 15, die dem Fahrzeuginnenraum 3 zugekehrt ist, der Karosseriewand 13 zugeordnet. Das Verdeck 4 mit seinem Verdeckgestänge 7 ist in einer Teilöffnungsstellung TE eingezeichnet. Von dem Verdeckgestänge 7 sind hier seitliche Hauptlenker 16 und 17 zu sehen, die mit einem Ende an einem nicht dargestellten, unterhalb der Gürtellinie GL in der Fahrzeugwand 10 angeordneten Verdecklager schwenkbeweglich verbunden sind; ihr anderes Ende ist mit dem Verdeck 4 verbunden. Bewegungsrichtungen des Verdeckgestänges 7 für das Ablegen und Schließen des Verdecks 4 sind durch Pfeile 18 und 19 angegeben.

In der Gürtellinie GL weist die Fahrzeugwand 10 eine in Fahrzeuglängsrichtung FL verlaufende Durchtrittsöffnung 20 für das Verdeckgestänge 7, insbesondere für die eine Schwenkbewegung (Pfeile 18 und 19) ausführenden Hauptlenker 16 und 17, auf, die seitlich außen von der Karosseriewand 13 und seitlich innen von der eine Aussparung 21 aufweisenden Säulenverkleidung 14 begrenzt wird. Die Säulenverkleidung 14 begrenzt die Durchtrittsöffnung 20 benachbart zur Aufbausäule 9 auch an ihrem vorderen Ende 22, an dem zumindest der vordere Lenker 16 steht, wenn das Verdeck 4 in der Schließstellung ST vorliegt. Der die Durchtrittsöffnung 20 begrenzende Rand 23 der Säulenverkleidung 14 bzw. der Aussparung 21 verläuft - in Draufsicht gesehen - etwa L-förmig, so dass ein Randabschnitt 24 dem Ende 22 zugeordnet ist und ein anderer Randabschnitt 25 des Randes 23 entlang der Fahrzeuglängsrichtung FL verläuft.

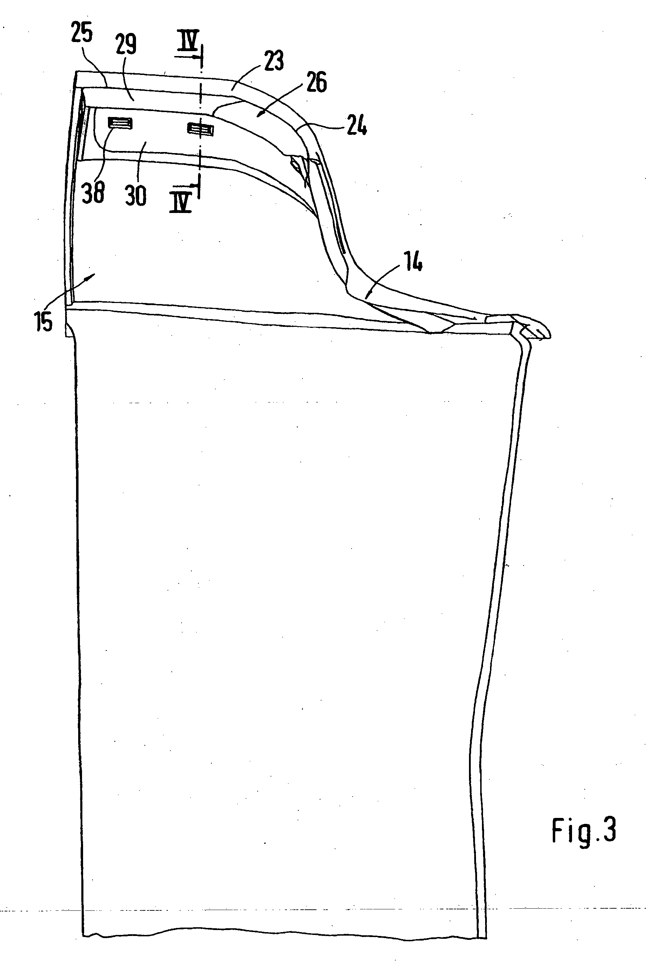

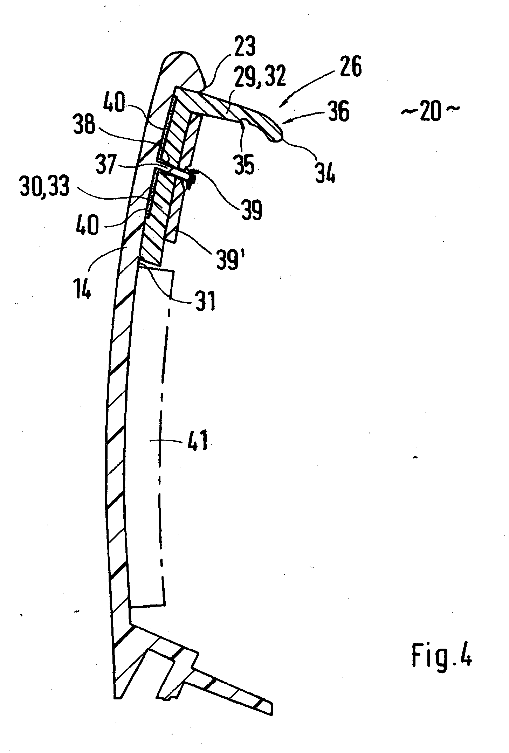

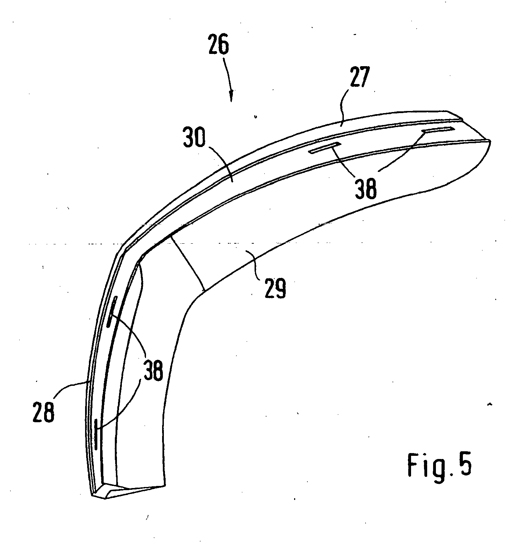

Um den Querschnitt der Durchtrittsöffnung 20 flexibel verändern und insbesondere anpassen zu können, wenn sich das Verdeck 4 in Schließstellung ST befindet, ist dem Rand 23 der Säulenverkleidung ein flexibler Dichtungsprofilstrang 26 zugeordnet, der den Rand 23 überragt und der in Draufsicht (Fig. 5) etwa L-förmig geformt ist sowie somit zwei Dichtabschnitte 27 und 28 aufweist, von denen der Dichtabschnitt 27 dem Randabschnitt 25 und der Dichtabschnitt 28 dem Randabschnitt 24 zugeordnet ist. An den Dichtabschnitten 27 und 28 ist durchgehend eine Dichtungslippe 29 ausgebildet, die von einem Befestigungsstreifen 30 ausgeht, der dazu dient, den Dichtungsprofilstrang 26 an der Innenseite 31 (Fig. 3) der Säulenverkleidung 14 zu befestigen. Befestigungsstreifen 30 und Dichtungslippe 29 sind so zueinander orientiert, dass der Dichtungsprofilstrang 26 einen etwa L-förmigen Querschnitt mit Profilschenkeln 32 und 33 (Fig. 4) besitzt, wobei der Profilschenkel 32 die Dichtungslippe 29 und der Profilschenkel 33 den Befestigungsstreifen 30 bildet. Benachbart zum freien Ende 34 der Dichtungslippe 29 kann noch eine Querschnittsschwächung 35 daran ausgebildet sein. Zudem ist es möglich, den Endabschnitt 36 mit dem freien Ende nach unten, also in die Durchtrittsöffnung 20 hin zu verformen. Jedenfalls erstreckt sich die Dichtungslippe 29 in der Ebene der Durchtrittsöffnung 20 in diese hinein und verringert so deren Öffnungsquerschnitt.

Von der Innenseite 31 der Säulenverkleidung 14 entspringt zumindest eine Schweißrippe 37 und durchsetzt den Befestigungsstreifen 30 in einem Durchgangsloch 38. Bevorzugt sind je Dichtabschnitt 27 und 28 zwei Schweißrippen 37 und zwei Durchgangslöcher 38 vorgesehen. Zur Befestigung des Dichtungsprofilstranges 26 werden die freien Enden der Schweißrippen 37 durch Wärmeverformung abgeflacht und verbreitet, so dass sich ein Kopf bzw. eine Halteplatte 39 ausbildet, die den Rand des jeweiligen Durchgangsloches 38 übergreift. Es könnte jedoch auch ein Haltestreifen 39' auf dem Befestigungsstreifen 30 aufliegen, wobei die Schweißrippen 37 diesen Haltestreifen ebenfalls durchgreifen und so die Halteplatte auf dem Haltestreifen 39' zu liegen kommt und diesen niederhält. Zusätzlich oder alternativ ist ferner zumindest ein Klebestreifen 40 zwischen Innenseite 31 und Befestigungsstreifen 30 eingebracht, wobei der Klebestreifen insbesondere aus doppelseitigem Klebeband gefertigt ist: Zur weiteren Fixierung und/oder Stützung der Dichtungslippe 29 kann der Rand 23 die Dichtungslippe 29 teilweise übergreifen, was aus Fig. 4 hervorgeht.

Für eine weitere Geräuschminimierung kann an der Innenseite 31 unterhalb des Dichtungsprofilstrangs 26 eine Dämmungsmatte 41 angebracht sein, die mehrteilig ausgeführt sein kann und sich nahezu vollflächig über die Innenseite 31 erstrecken kann.

Nach einem nicht gezeigten Ausführungsbeispiel könnte zumindest einer der beiden Dichtabschnitte 27 und/oder 28 als geschlossenes Hohlprofil, also quasi als Schlauch, ausgebildet sein. Außerdem kann an der Säulenverkleidung 14 benachbart zur Aussparung 21 eine hier nicht dargestellte Öffnung für den Durchtritt eines Sicherheitsgurtes vorgesehen sein, insbesondere dann, wenn die sich von Gürtellinie GL bis nahezu an den Fahrzeugboden FB (Fig. 2) erstreckende Säulenverkleidung 14 einen in der Fahrzeugwand 10 angeordneten Gurtaufroller verdeckt.

## Patentansprüche

1. Fahrzeugwand (10) mit einer eine Aufbausäule (12) umfassenden Karosseriewand (13), die eine Außenseite (13') und eine einem Fahrzeuginnenraum (3) zugekehrt liegende Innenseite (15) aufweist, mit einer inneren Säulenverkleidung (14) für die Innenseite (15) der Karosseriewand (13) und mit einer etwa in Fahrzeuglängsrichtung (FL) verlaufenden Durchtrittsöffnung (20) für ein Verdeckgestänge (7) eines Verdecks (4), wobei die Durchtrittsöffnung (20) in der Gürtellinie (GL) der Fahrzeugwand (10) liegt und seitlich innen und an ihrem vorderen, benachbart zur Aufbausäule (12) liegende Ende (22) von der Säulenverkleidung (14) sowie seitlich außen von der Karosseriewand (13) begrenzt wird, **dadurch gekennzeichnet, dass** an der Säulenverkleidung (14) ein Dichtungsprofilstrang (26) befestigt ist, der sowohl seitlich innen als auch an dem vorderen Ende (22) in die Durchtrittsöffnung (20) hineinragt und an dem Verdeckgestänge (7) anliegt, wenn sich das Verdeck (4) in Schließstellung (ST) befindet.

2. Fahrzeugwand nach Anspruch 1, **dadurch gekennzeichnet, dass** der Dichtungsprofilstrang (26) in Draufsicht L-förmig ausgeführt ist.

3. Fahrzeugwand nach einem der vorhergehenden Ansprüche, **dadurch gekennzeichnet, dass** der Dichtungsprofilstrang (26) eine durchgehende Dichtungslippe (29) aufweist.

4. Fahrzeugwand nach einem der vorhergehenden Ansprüche, **dadurch gekennzeichnet, dass** der Dichtungsprofilstrang (26) im Querschnitt L-förmig mit zwei Profilschenkeln (32, 33) ausgeführt ist und dass der eine Profilschenkel (32) die Dichtungslippe (29) und der andere Profilschenkel (33) einen Befestigungsstreifen (30) für den Dichtungsprofilstrang (26) an der Säulenverkleidung (14) bildet.

5. Fahrzeugwand nach einem der vorhergehenden Ansprüche, **dadurch gekennzeichnet, dass** an der Innenseite (31) der Säulenverkleidung (14) zumindest eine Schweißrippe (37) entspringt, die den Befestigungsstreifen (30) durchdringt und die an ihrem freien Ende eine durch Wärmeverformung abgeflachten Halteplatte (39) aufweist.

6. Fahrzeugwand nach einem der vorhergehenden Ansprüche, **dadurch gekennzeichnet, dass** der Befestigungsstreifen (30) durch ein Klebeband (40) an der Innenseite (31) der Säulenverkleidung (14) befestigt ist.

7. Fahrzeugwand nach einem der vorhergehenden Ansprüche, **dadurch gekennzeichnet, dass** die Säulenverkleidung (14) aus Kunststoff gefertigt ist und die Schweißrippe (37) einstückig mit der Säulenverkleidung (14) ausgebildet ist.

## Claims

1. Vehicle wall (10) with a bodywork wall (13) which comprises a body pillar (12) and has an external side (13') and an internal side (15) facing a vehicle interior (3), with an inner pillar lining (14) for the internal side (15) of the bodywork wall (13) and with a passage opening (20), which runs approximately in the longitudinal direction (FL) of the vehicle, for a convertible-top linkage (7) of a convertible top (4), wherein the passage opening (20) lies in the belt line (GL) of the vehicle wall (10) and is bounded laterally on the inside and at its front end (22), which is adjacent to the body pillar (12), by the pillar lining (14) and is bounded laterally on the outside by the bodywork wall (13), **characterized in that** a sealing profile strand (26) is fastened to the pillar lining (14), said sealing profile strand projecting into the passage opening (20) both laterally on the inside and at the front end (22) and bearing against the convertible-top linkage (7) when the convertible top (4) is in the closed position (ST).

2. Vehicle wall according to Claim 1, **characterized in that** the sealing profile strand (26) is of L-shaped design in top view.

3. Vehicle wall according to either of the preceding claims, **characterized in that** the sealing profile strand (26) has a continuous sealing lip (29).

4. Vehicle wall according to one of the preceding claims, **characterized in that** the sealing profile strand (26) is of L-shaped design in cross section with two profile limbs (32, 33), and **in that** the one profile limb (32) forms the sealing lip (29) and the other profile limb (33) forms a fastening strip (30) for the sealing profile strand (26) on the pillar lining (14).

5. Vehicle wall according to one of the preceding claims, **characterized in that** at least one welding rib (37) originates on the internal side (31) of the pillar lining (14), said welding rib penetrating the fastening strip (30) and the free end of said welding rib having a retaining plate (39) which is flattened by heat deformation.

6. Vehicle wall according to one of the preceding claims, **characterized in that** the fastening strip (30) is fastened to the internal side (31) of the pillar lining (14) by an adhesive tape (40).

7. Vehicle wall according to one of the preceding claims, **characterized in that** the pillar lining (14) is manufactured from plastic and the welding rib (37) is formed integrally with the pillar lining (14).

## Revendications

1. Paroi de véhicule (10) avec une paroi de carrosserie (13) comprenant un montant de caisse (12), la paroi de carrosserie présentant un côté extérieur (13') et un côté intérieur (15) tourné vers un habitacle (3) du véhicule, avec un habillage de montant intérieur (14) pour le côté intérieur (15) de la paroi de carrosserie (13) et avec une ouverture de passage (20) s'étendant approximativement dans la direction longitudinale du véhicule (FL) pour une tringlerie de capote (7) d'une capote (4), l'ouverture de passage (20) étant située dans la ligne de ceinture (GL) de la paroi de véhicule (10) et étant limitée latéralement à l'intérieur et au niveau de son extrémité avant (22) située à côté du montant de caisse (12) par l'habillage de montant (14) et latéralement à l'extérieur par la paroi de carrosserie (13), **caractérisée en ce qu'**une bande profilée d'étanchéité (26) est fixée à l'habillage de montant (14), laquelle pénètre à la fois latéralement à l'intérieur et au niveau de l'extrémité avant (22) dans l'ouverture de passage (20) et s'applique contre la tringlerie de capote (7) lorsque la capote (4) se trouve dans la position de fermeture (ST).

2. Paroi de véhicule selon la revendication 1, **caractérisée en ce que** la bande profilée d'étanchéité (26) est réalisée, vue de dessus, en forme de L.

3. Paroi de véhicule selon l'une quelconque des revendications précédentes, **caractérisée en ce que** la bande profilée d'étanchéité (26) présente une lèvre d'étanchéité continue (29).

4. Paroi de véhicule selon l'une quelconque des revendications précédentes, **caractérisée en ce que** la bande profilée d'étanchéité (26) est réalisée avec une section transversale en forme de L avec deux branches profilées (32, 33) et **en ce que** l'une des branches profilées (32) forme la lèvre d'étanchéité (29) et l'autre branche profilée (33) forme un ruban de fixation (30) de la bande profilée d'étanchéité (26) contre l'habillage de montant (14).

5. Paroi de véhicule selon l'une quelconque des revendications précédentes, **caractérisée en ce qu'**au moins une nervure de soudage (37) part élastiquement au niveau du côté intérieur (31) de l'habillage de montant (14), laquelle nervure de soudage traverse le ruban de fixation (30) et présente à son extrémité libre une plaque de retenue (39) aplatie par une déformation thermique.

6. Paroi de véhicule selon l'une quelconque des revendications précédentes, **caractérisée en ce que** le ruban de fixation (30) est fixé par une bande adhésive (40) au côté intérieur (31) de l'habillage de montant (14).

7. Paroi de véhicule selon l'une quelconque des revendications précédentes, **caractérisée en ce que** l'habillage de montant (14) est fabriqué en plastique et la nervure de soudage (37) est réalisée d'une seule pièce avec l'habillage de montant (14).
